# EUROPEAN PATENT APPLICATION

(11) **EP 4 832 072 A1**
(43) Date of publication of application: **28.10.2026**
(21) Application number: 26174188.8
(22) Date of filing: 23.04.2026
(51) Int. Cl.: H01M 4/131, H01M 4/1391, H01M 4/36, H01M 4/525, H01M 10/0525

(54) **POSITIVE ELECTRODE ACTIVE MATERIAL AND PREPARATION METHOD THEREOF**

(30) Priority: 24.04.2025 KR 20250053722
(71) Applicant: SAMSUNG SDI CO., LTD., Yongin-si, Gyeonggi-do 17084 (KR)
(72) Inventor: HWANG, Hoseong, 17084 Yongin-si, Gyeonggi-do (KR); KIM, Teayeop, 17084 Yongin-si, Gyeonggi-do (KR); LEE, Jongjin, 17084 Yongin-si, Gyeonggi-do (KR); JI, Seorin, 17084 Yongin-si, Gyeonggi-do (KR); KIM, Jinyoung, 17084 Yongin-si, Gyeonggi-do (KR)
(74) Representative: Bardehle Pagenberg Partnerschaft mbB Patentanwälte Rechtsanwälte

(57) **Abstract**

Provided is a positive electrode active material including a core particle including a lithium cobalt-based composite oxide, and a carbon coating layer on the surface of the core particle. The carbon coating layer includes graphene having a layered structure in a range of 2 layers to 50 layers, and a size of the graphene measured through an electron microscope image of a surface of the positive electrode active material is less than about 1 µm.

## Description

### CROSS-REFERENCE TO RELATED APPLICATION

This application claims priority to Korean Patent Application No. 10-2025-0053722 filed with the Korean Intellectual Property Office on 24 April 2025, the entire contents of which are incorporated herein by reference.

### BACKGROUND

### 1. Field

A positive electrode active material, and a preparation method thereof are disclosed.

### 2. Description of the Related Art

A portable information device such as a cell phone, a laptop, smart phone, and the like typically uses a rechargeable lithium battery having high energy density and easy portability as a driving power source. Recently, a rechargeable lithium battery with high energy density as a driving power source for hybrid or electric vehicles or power storage power source may be advantageous.

Various positive electrode active materials have been investigated to realize rechargeable lithium batteries for applications to the uses. For example, lithium nickel-based oxide, lithium nickel manganese cobalt composite oxide, lithium nickel cobalt aluminum composite oxide, and lithium cobalt oxide are mainly used as positive electrode active materials. For example, in a situation where the demand for large-sized, high-capacity, or high-energy-density rechargeable lithium batteries has been increasing, developing positive electrode active materials that exhibit desired or improved conductivity may be advantageous.

### SUMMARY

Some example embodiments include a positive electrode active material capable of improving conductivity, and a method for preparing the positive electrode active material.

In some example embodiments, a positive electrode active material includes a core particle including a lithium cobalt-based composite oxide, and a carbon coating layer on the surface of the core particle. The carbon coating layer includes graphene having a layered structure of 2 layers to 50 layers, and a size of the graphene measured through an electron microscope image of a surface of the positive electrode active material is less than about 1 µm.

In some example embodiments, a positive electrode active material includes a core particle including a lithium cobalt-based composite oxide, and a carbon coating layer on the surface of the core particle. The carbon coating layer includes graphene having a layered structure of 2 layers to 50 layers, and the graphene of the carbon coating layer is included in an amount greater than or equal to about 0.1 wt% based on a total of 100 wt% of the positive electrode active material.

In some example embodiments, a method for preparing a positive electrode active material includes (i) preparing a core particle including a lithium cobalt-based composite oxide, (ii) pulverizing flake-shaped graphite having an average size (D₅₀) in a range of about 3 µm to about 25 µm to prepare particulate graphite having an average size (D₅₀) of less than about 1 µm, and (iii) dry-mixing the core particle and the particulate graphite to obtain a positive electrode active material.

The positive electrode active material according to some example embodiments may exhibit low powder resistance, and improved conductivity. In addition, a positive electrode and a rechargeable lithium battery including the positive electrode active material may have improved energy density.

The method for preparing the positive electrode active material according to some example embodiments may improve a coating yield of a carbon material on the surface of the core particle while reducing or minimizing manufacturing costs, and may prepare a positive electrode active material having desired or improved conductivity.

### BRIEF DESCRIPTION OF THE DRAWINGS

FIG. 1 to FIG. 4 are cross-sectional views schematically showing a rechargeable lithium battery according to some example embodiments.
FIG. 5 is a scanning electron microscope image of the surface of particulate graphite used during the manufacturing of the positive electrode active material of Example 1.
FIG. 6 is a scanning electron microscope image of the surface of flake-shaped graphite used during the manufacturing of the positive electrode active material of Comparative Example 1.
FIG. 7 is a scanning electron microscope image of the surface of particulate graphite used during the manufacturing of the positive electrode active material of Comparative Example 2.
FIG. 8 is a scanning electron microscope image of the surface of the positive electrode active material prepared in Example 1.
FIG. 9 is a scanning electron microscope image of the surface of the positive electrode active material prepared in Comparative Example 1.
FIG. 10 is a scanning electron microscope image of the surface of the positive electrode active material prepared in Comparative Example 2.
FIG. 11 is a transmission electron microscope image of the cross-section of the positive electrode active material prepared in Example 1.

### DETAILED DESCRIPTION

Hereinafter, example embodiments are described in detail so that those of ordinary skill in the art can readily achieve them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

"Combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, and the like, may be exaggerated for clarity, and like reference numerals designate like elements throughout the specification. It is understood that when an element such as a layer, film, region, or substrate is referred to as being "on" another element, the element can be directly on the other element, or intervening elements may also be present therebetween. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope (TEM) image or a scanning electron microscope (SEM) image. Alternatively, it is possible to obtain an average particle diameter value by measuring using a dynamic light scattering method, performing data analysis, counting the number of particles for each particle size range, and calculating the average particle diameter value based on the count. As used herein, when a definition is not otherwise provided, the average particle diameter (D₅₀) may mean the diameter of particles having a cumulative volume of 50 vol% in the particle size distribution. As used herein, when a definition is not otherwise provided, the average particle diameter (D₅₀) means a diameter of particles having a cumulative volume of 50 vol% in the particle size distribution that is obtained by measuring the size (diameter or length of the major axis) of about 20 particles at random in a scanning electron microscope image.

"Or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode Active Material

A positive electrode active material according to some example embodiments includes a core particle including a lithium cobalt-based composite oxide, and a carbon coating layer on the surface of the core particle. The carbon coating layer includes graphene having a layered structure in a range of 2 layers to 50 layers, a size of the graphene measured through an electron microscope image of the surface of the positive electrode active material is less than about 1 µm.

Generally, during the manufacturing of a positive electrode, a binder and a conductive material are added to improve adhesive strength between the electrode plate and the positive electrode active material and the conductivity of the positive electrode, but as the usage amount of the binder and the conductive material increases, there may be a challenge in that the energy density of the battery decreases because the amount of the positive electrode active material decreases. Because the positive electrode active material according to some example embodiments includes a carbon coating layer including graphene of a layered structure in a range of 2 layers to 50 layers, the carbon coating layer may be coated on the surface of the active material particles even with a low amount of carbon material, so that adhesive strength and conductivity may be enhanced. Therefore, high energy density and conductivity may be secured even if (when) a small amount of binder and conductive material is used during the manufacturing of the positive electrode. In addition, as the amount of the binder and conductive material used in the manufacturing of the positive electrode decreases, the amount of the positive electrode active material may increase, so that a rechargeable lithium battery including the positive electrode active material may exhibit high capacity and high energy density characteristics.

For example, when forming a carbon coating layer using a crystalline carbon material with low dispersibility, there may be a challenge in that it may be difficult to evenly form the carbon coating layer on the surface of the core particle because the carbon materials aggregate with each other. However, the positive electrode active material according to some example embodiments may implement a carbon coating layer having a thin and uniform, or substantially uniform, thickness by selecting the crystalline carbon material as desired, which is the source material of the carbon coating layer, and coating the crystalline carbon material under appropriate or desired conditions. The carbon coating layer has a layered structure exhibiting a dense crystal structure, and may include crystalline carbon formed in a two-dimensional plane on the surface of the core particle. Accordingly, the resistance of the positive electrode active material is lowered, intercalation and deintercalation of lithium ions are performed more effectively, and ionic conductivity may be improved because lithium ions diffuse along the layered structure. In addition, the positive electrode including the positive electrode active material exhibits desired or improved electronic conductivity even if (when) the positive electrode does not include a separate conductive material or includes a substantially small amount of conductive material, and the positive electrode including such a positive electrode active material can exhibit high adhesive strength to the electrode plate even if (when) the positive electrode includes a substantially small amount of binder. A rechargeable lithium battery including such a positive electrode may exhibit high capacity and energy density, and overall electrochemical performance such as charge/discharge efficiency and rate characteristics may be improved.

For example, since it may be challenging to evenly coat a crystalline carbon material as a source material of the carbon coating layer on the surface of the core particle, coating characteristics are not as desired, such as being non-uniformly coated, aggregating on the surface, or being separated from the surface. In addition, with existing coating methods, the coating yield of the carbon material on the surface of the core particle is low, and thus there may be a challenge in that there is a given limit in improving the conductivity of the positive electrode active material. However, in the case of the positive electrode active material according to some example embodiments, by controlling the size of the carbon material as desired, the size of the graphene included in the carbon coating layer may be adjusted to improve the coating yield on the surface of the core particle. Accordingly, a carbon coating layer including a high amount of graphene may be formed on the surface of the core particle even with a substantially small amount of carbon material, and the electrical conductivity of the positive electrode active material may be improved or maximized because the powder resistance of the positive electrode active material is further lowered.

For example, a method of inducing a carbon coating layer including graphene on the surface of the core particle of a positive electrode active material using graphene as a raw material exist, but the coating process is complicated or the cost is high, so there is a limit to commercialization, and there is also a limit to securing a carbon coating layer in a film form having a uniform, or substantially uniform, thickness on the surface of the core particle. In addition, technologies for coating amorphous carbon on the surface of core particle exist, but uniform, or substantially uniform, coating is difficult, and there was a limit to increasing energy density while increasing electronic conductivity and lowering resistance of the positive electrode. The positive electrode active material according to some example embodiments introduces graphene in a uniform, or substantially uniform, film form having a thickness in a range of 2 atomic layers to 50 atomic layers, or several to tens of nanometers, as a carbon coating layer on the surface of the core particle. The positive electrode active material according to some example embodiments can achieve higher electronic conductivity and ionic conductivity, can increase energy density while lowering resistance, and may achieve superior electrochemical performance compared to the case of coating amorphous carbon or coating other crystalline carbons. In addition, the positive electrode active material according to some example embodiments may apply a dry coating method while using graphite, which is a low-cost material, and thus cost reduction is possible, processability is as desired, and it is advantageous for mass production.

Hereinafter, the configuration of the positive electrode active material according to some example embodiments is described in detail.

### Core Particle

The core particle includes a lithium cobalt-based composite oxide. For example, the core particle may include a lithium cobalt-based composite oxide represented by Chemical Formula 1:

Chemical Formula 1: Liₐ₁Coₓ₁M¹_{y1}O_{2-b1}X_{b1}. .

In Chemical Formula 1, 0.9≤a1≤1.8, 0.7≤x1≤1, 0≤y1≤0.3, 0.9≤x1+y1≤1.1, and 0≤b1≤0.1, M¹ is or includes one or more elements of Al, B, Ba, Ca, Ce, Cr, Cu, Fe, Mg, Mn, Mo, Ni, Se, Si, Sn, Sr, Ti, V, W, Y, Zn, and Zr, and X is or includes one or more elements of F, P, and S.

When the core particle includes the lithium cobalt-based composite oxide represented by Chemical Formula 1, high-voltage design of a rechargeable lithium battery is possible, and since gas generation at high voltage is reduced, the reliability and safety of the rechargeable lithium battery can be improved, and battery resistance may be reduced or suppressed by exerting a synergistic effect in a rapid charging system.

An average particle diameter (D₅₀) of the core particle may be in a range of about 1 µm to about 25 µm, about 3 µm to about 22 µm, or about 10 µm to about 18 µm. If (when) the average particle diameter (D₅₀) of the core particle satisfies the above range, structural stability of the positive electrode active material can be promoted while electrical conductivity of the positive electrode active material is improved. In addition, positive electrode slurry stability and electrode plate mixture density in the positive electrode manufacturing process may be improved. For example, because a movement path for lithium ions to reach the surface of the positive electrode active material becomes longer, the formation of impurities occurring on the surface of the positive electrode active material can be reduced or minimized. Accordingly, problems that may occur due to surface impurities, for example, reduction in battery capacity, increase in interface resistance due to interference with the movement of lithium ions, gas generation due to decomposition of impurities, and resultant swelling of the battery can be reduced or prevented. As a result, capacity characteristics, high-temperature stability, and charge/discharge characteristics of a rechargeable lithium battery including the positive electrode active material can be improved. Herein, the average particle diameter (D₅₀) of the core particle may be obtained by randomly selecting about 20 particles from a scanning electron microscope image of the core particle, measuring their particle diameters (diameter, major diameter, or length of the major axis) to obtain a particle size distribution, and then taking the size of particles having a cumulative volume of 50 vol% from the particle size distribution as the average particle diameter.

The core particle may include first particles having an average particle diameter (D₅₀) in a range of about 8 µm to about 20 µm and a second particle having an average particle diameter (D₅₀) in a range of about 0.5 µm to about 6 µm. For example, the first particles having a relatively large average particle diameter may be expressed as large particles, and the second particles having a relatively small average particle diameter may be expressed as small particles. Because the positive electrode active material layer includes both the large particles and the small particles, capacity and energy density may be improved or maximized and long cycle-life characteristics may be implemented.

The average particle diameter (D₅₀) of the first particle may be in a range of about 9 µm to about 20 µm, about 10 µm to about 18 µm, or about 12 µm to about 16 µm. Herein, the average particle diameter (D₅₀) of the first particles may be one obtained by randomly selecting about 20 particles in a scanning electron microscope image of the first particles, measuring the particle diameter (diameter, major diameter, or length of the major axis) to obtain a particle size distribution, and then taking the size of particles having a cumulative volume of 50 vol% from the particle size distribution as the average particle diameter.

An average particle diameter (D₅₀) of the second particles may be in a range of about 0.8 µm to about 6 µm, about 1.0 µm to about 5.8 µm, or about 1.0 µm to about 5.5 µm. Herein, the average particle diameter (D₅₀) of the second particles may be one obtained by randomly selecting about 20 particles in a scanning electron microscope image of the second particles, measuring the particle diameter (diameter, major diameter, or length of the major axis) to obtain a particle size distribution, and then taking the size of particles having a cumulative volume of 50 vol% from the particle size distribution as the average particle diameter.

### Carbon Coating Layer

The carbon coating layer is positioned on the surface of the core particle, includes graphene of a layered structure in a range of 2 layers to 50 layers, and a size of the graphene measured through an electron microscope image of the surface of the positive electrode active material is less than about 1 µm. Through the carbon coating layer, conductivity and adhesive strength with the electrode plate may be secured even if (when) a small amount of binder and conductive material is used during the manufacturing of the positive electrode. In addition, as the amount of the binder or the conductive material used during the manufacturing of the positive electrode decreases, the amount of the positive electrode active material may be increased, so that a rechargeable lithium battery may exhibit high capacity and high energy density characteristics. For example, the carbon coating layer includes crystalline carbon formed in a two-dimensional plane on the surface of the core particle, and may have a thin and uniform, or substantially uniform, thickness. In addition, the graphene of the carbon coating layer may have a layered structure exhibiting a dense crystal structure. Accordingly, electronic conductivity of the positive electrode active material is improved and interface resistance can be lowered, intercalation and deintercalation of lithium ions are performed more effectively, and ionic conductivity may be improved because lithium ions diffuse along the layered structure. In addition, the coating yield on the surface of the core particle can be improved by adjusting the size of graphene as desired, and a carbon coating layer including a high amount of graphene can be provided on the surface of the core particle even with a substantially small amount of carbon material. Accordingly, the electrical conductivity of the positive electrode active material may be improved or maximized because the powder resistance of the positive electrode active material is further lowered.

The layered structure in a range of 2 layers to 50 layers may be expressed as a layered structure of 2 atomic layers to 50 atomic layers. As an example, the carbon coating layer may include graphene of a layered structure of 2 layers to 48 layers, 5 layers to 45 layers, 7 layers to 40 layers, or 10 layers to 35 layers. The number of layers of the layered structure may be measured in a high-resolution transmission electron microscope (HR-TEM) image of the positive electrode active material particle.

The interlayer spacing (d₀₀₂) of the layered structure may be in a range of about 0.320 nm to about 0.350 nm, for example, about 0.325 nm to about 0.348 nm, about 0.328 nm to about 0.345 nm, or about 0.330 nm to about 0.342 nm. If (when) the interlayer spacing (d₀₀₂) of the layered structure satisfies the above range, the conductivity of the positive electrode active material may be further improved. Herein, the interlayer spacing (d₀₀₂) may be measured by a method known to those skilled in the art. For example, the interlayer spacing (d₀₀₂) of the layered structure may be measured by obtaining the peak of the (002) plane through X-ray diffraction (XRD) of the carbon coating layer, and then analyzing the peak of the (002) plane. Herein, the (002) plane represents the range of 25.0° < 2θ < 27.0°, where 20 represents the diffraction angle. For example, XRD measurement data may be subjected to noise removal (baseline setting), and the like, using a conventional program equipped in the XRD device as a data processing and analysis program. Additionally, the peak profile of the peak on the (002) plane may be fitted with a conventional fitting function such as a Gaussian function, a Lorenz function, and the like. For example, the interlayer spacing (d₀₀₂) of the layered structure may be expressed by a method of measuring the interlayer spacing (d₀₀₂) of the particulate graphite, and the interlayer spacing (d₀₀₂) of the particulate graphite may be measured through XRD analysis of the particulate graphite. The number of layers in the layered structure, the interlayer spacing (d₀₀₂), and the thickness of the coating layer are determined as average values obtained from measurements at multiple randomly selected locations on the cross-section of the core particles via HR-TEM. It is noted that the correlation between these parameters follows the physical characteristics of the graphene coating, where the total thickness of the coating layer is the product of the number of layers and the average interlayer spacing. The graphene may have a ratio (I_{D}/I_{G}) of a peak intensity (I_{D}) near 1350 cm⁻¹ to a peak intensity (I_{G}) near 1580 cm⁻¹ in a Raman spectrum in a range of about 0.15 to about 0.50, and for example, about 0.15 to about 0.45, about 0.18 to about 0.45, or about 0.20 to about 0.40. If (when) the value of I_{D}/I_{G} of the graphene satisfies the above range, the conductivity of the positive electrode active material may be improved or maximized. For instance, the Raman spectra may be measured using a Raman spectrometer (e.g., ICRM7000 (Renishaw), etc.) under the conditions of a laser wavelength of about 632 nm and a lowest Raman shift of about 946 cm⁻¹. The peak intensity ratios described herein are obtained from peaks observed in the Raman shift range starting from the lowest Raman shift of about 946 cm⁻¹. These measurement conditions are standard in the art, and it would be within the ability of a person skilled in the art to adjust these parameters, such as laser power or exposure time, while maintaining the relative trend of the peak intensity ratios, to ensure reproducibility.

For example, the size of the graphene may be less than or equal to about 0.9 µm, less than or equal to about 0.8 µm, less than or equal to about 0.7 µm, less than or equal to about 0.6 µm, or less than or equal to about 0.5 µm, and may be greater than or equal to about 0.01 µm, greater than or equal to about 0.05 µm, or greater than or equal to about 0.08 µm, and may be about 0.01 µm to about 0.8 µm, about 0.01 µm to about 0.6 µm, or about 0.05 µm to about 0.5 µm. If (when) the size of the graphene satisfies the above range, a higher amount of graphene may be formed with a uniform, or substantially uniform, thickness on the surface of the core particle, and the conductivity of the positive electrode active material may be further improved because the powder resistance is further lowered. Herein, as for the size of graphene, because graphene is in a sheet shape, it means the longest length or the length of the major axis in a portion corresponding to a surface of the sheet, not the thickness of the sheet. The size of graphene may mean the longest length among lines connecting one point to another point on one surface of the graphene sheet. For example, the size of the graphene may be measured through TEM (Transmission Electron Microscope), SEM (Scanning Electron Microscope), AFM (Atomic Force Microscopy), TOF-SIMS (Time-of-Flight Secondary Ion Mass Spectrometry), XPS (X-ray photoelectron spectroscopy), or EDS (Energy-dispersive spectroscopy), and the like, and for example, may be measured through an electron microscope image for the surface of the positive electrode active material.

A ratio of the size of the graphene to the average particle diameter (D₅₀) of the core particle may be less than about 0.1, and for example, may be less than or equal to about 0.09, less than or equal to about 0.08, less than or equal to about 0.07, less than or equal to about 0.06, or less than or equal to about 0.05, and may be greater than or equal to about 0.001, greater than or equal to about 0.005, greater than or equal to about 0.01, or greater than or equal to about 0.015. If (when) the ratio of the size of the graphene to the average particle diameter (D₅₀) of the core particle satisfies the above range, a higher amount of graphene can be formed with a uniform, or substantially uniform, thickness on the surface of the core particle, and the conductivity of the positive electrode active material may be further improved. Here, the average particle diameter (D₅₀) of the core particle may be measured through a particle size analyzer using laser diffraction, and the size of the graphene may be measured through an SEM image for the surface of the positive electrode active material particle.

The thickness of the graphene may be less than or equal to about 20 nm, for example, the thickness of the graphene may be less than or equal to about 19 nm, less than or equal to about 18 nm, less than or equal to about 17 nm, less than or equal to about 16 nm, or less than or equal to about 15 nm, and may be greater than or equal to about 1 nm, greater than or equal to about 2 nm, greater than or equal to about 3 nm, greater than or equal to about 4 nm, or greater than or equal to about 5 nm. If (when) the thickness of the graphene satisfies the above range, a higher amount of graphene may be formed with a uniform, or substantially uniform, thickness on the surface of the core particle, and the conductivity of the positive electrode active material may be further improved. Herein, the thickness of graphene may be measured through a Raman spectrum. For example, the thickness of graphene can be measured based on a ratio of a peak intensity near 1580 cm⁻¹ to a peak intensity near 2700 cm⁻¹ in a Raman spectrum. However, the present disclosure is not limited thereto, and the thickness of the graphene may be measured through, for example, TEM, SEM, AFM, TOF-SIMS, XPS, or EDS analysis, and the like. As an example, the thickness of the graphene may be measured through an SEM or TEM image of a cross-section of the positive electrode active material particle.

The graphene of the carbon coating layer may be derived from particulate graphite having an average size (D₅₀) of less than about 1 µm as measured by a particle size analyzer using laser diffraction. In this case, because the coating yield of particulate graphite is improved, a higher amount of graphene may be formed with a uniform, or substantially uniform, thickness on the surface of the core particle, and accordingly, the conductivity of the positive electrode active material may be improved or maximized. In addition, structural stability of the positive electrode active material may be improved, side reactions with the electrolyte may be effectively reduced or suppressed, gas generation amount under high-voltage and high-temperature conditions may be reduced, and long cycle-life characteristics may be implemented.

The particulate graphite may be or include a plate-shaped particle. The average size (D₅₀) of the particulate graphite may be less than about 1 µm, and for example, may be less than or equal to about 0.9 µm, less than or equal to about 0.8 µm, less than or equal to about 0.7 µm, less than or equal to about 0.6 µm, or less than or equal to about 0.5 µm, and may be greater than or equal to about 0.01 µm, greater than or equal to about 0.05 µm, or greater than or equal to about 0.08 µm. If (when) the average size of the particulate graphite satisfies the above range, because the coating yield of particulate graphite is improved, a higher amount of graphene may be formed with a uniform, or substantially uniform, thickness on the surface of the core particle, and the conductivity of the positive electrode active material may be improved or maximized. Here, the average size (D₅₀) of the particulate graphite may be measured with a particle size analyzer using laser diffraction, and it means a size of particles where a cumulative volume is 50 vol% in a particle size distribution. In addition, the particle size here may mean a length of the longest axis in the plane direction perpendicular to the thickness direction in the plate shape.

A ratio of the average size (D₅₀) of the particulate graphite to the average particle diameter (D₅₀) of the core particle may be less than 0.1, and for example, may be less than or equal to about 0.09, less than or equal to about 0.08, less than or equal to about 0.07, less than or equal to about 0.06, or less than or equal to about 0.05, and may be greater than or equal to about 0.001, greater than or equal to about 0.005, greater than or equal to about 0.01, or greater than or equal to about 0.015. If (when) the ratio of the average size (D₅₀) of the particulate graphite to the average particle diameter (D₅₀) of the core particle satisfies the above range, a higher amount of graphene can be formed with a uniform, or substantially uniform, thickness on the surface of the core particle, and the conductivity of the positive electrode active material may be further improved.

A thickness of the particulate graphite may be less than or equal to about 1.0 µm, and for example, may be less than about 1 µm, less than or equal to about 0.9 µm, less than or equal to about 0.7 µm, or less than or equal to about 0.5 µm, and may be greater than or equal to about 0.01 µm, greater than or equal to about 0.05 µm, or greater than or equal to about 0.08 µm. If (when) the thickness of the particulate graphite satisfies the above range, because the coating yield of particulate graphite is improved, a higher amount of graphene may be formed with a uniform, or substantially uniform, thickness on the surface of the core particle, and the conductivity of the positive electrode active material may be improved or maximized. Herein, the thickness of the particulate graphite may be measured through a transmission electron microscope for the particulate graphite. Alternatively, the thickness of the particulate graphite may be measured through a transmission electron microscope for a cross-section of a particulate graphite particle cut by FIB. However, the present disclosure is not limited thereto, and the thickness of the particulate graphite may be measured through, for example, SEM, TEM, TOF-SIMS, XPS, AFM, or EDS analysis, and the like, and/or may be measured through a TEM-EDS line profile.

The particulate graphite may have a ratio (I_{D}/I_{G}) of a peak intensity (I_{D}) near 1350 cm⁻¹ to a peak intensity (I_{G}) near 1580 cm⁻¹ in a Raman spectrum in a range of about 0.15 to about 0.50, for example, about 0.15 to about 0.45, about 0.18 to about 0.45, or about 0.20 to about 0.40. If (when) the value of I_{D}/I_{G} of the particulate graphite satisfies the above range, the carbon coating layer may be formed with a uniform, or substantially uniform, thickness on the surface of the core particle, and the conductivity of the positive electrode active material may be improved or maximized.

The graphene of the carbon coating layer may be included in an amount in a range of about 0.09 wt% to about 3.0 wt% based on 100 wt% of the total weight of the positive electrode active material, and for example, may be included in an amount in a range of about 0.09 wt% to about 2.8 wt%, about 0.09 wt% to about 2.5 wt%, about 0.092 wt% to about 2.0 wt%, about 0.092 wt% to about 1.0 wt%, about 0.095 wt% to about 0.5 wt%, or about 0.095 wt% to about 0.8 wt% based on 100 wt% of a total weight of the positive electrode active material. If (when) the amount of graphene satisfies the above range, high capacity and high energy density characteristics of a rechargeable lithium battery may be improved while securing conductivity by reducing powder resistance of the positive electrode active material. For example, even if (when) the amount of the graphene is a substantially small amount of less than about 1 wt%, it is coated as desired on the surface of the particles to increase the electronic conductivity of the positive electrode active material, thereby increasing electrical conductivity and increasing the density of the positive electrode. The amount of the graphene may be measured using a CS analyzer, and for example, it may be measured by the method of Evaluation Example 2 described below.

The carbon coating layer may be in a form of a film that continuously, or substantially continuously, surrounds the surface of the core particle, for example, or may be in the form of a shell that surrounds the entire surface of the core particle. This is distinct from a structure in which only a portion of the surface of the core particle is partially coated. When the carbon coating layer is provided in a form surrounding the surface of the core particle as a whole, the conductivity of the positive electrode active material may be improved or maximized. In addition, the electrode plate adhesive strength of the positive electrode active material may be improved, the resistance does not rise or capacity does not decrease, structural stability is improved, side reactions with the electrolyte may be effectively reduced or suppressed, gas generation amount under high-voltage and high-temperature conditions may be reduced, and long-life characteristics may be implemented.

A thickness of the carbon coating layer may be in a range of about 3 nm to about 50 nm, and for example, about 3 nm to about 45 nm, about 3 nm to about 40 nm, about 3 nm to about 35 nm, about 3 nm to about 30 nm, about 4 nm to about 20 nm, or about 5 nm to about 15 nm. If (when) the thickness of the carbon coating layer satisfies the above range, structural stability of the positive electrode active material may be improved and side reactions with the electrolyte may be effectively reduced or suppressed without increasing resistance or decreasing capacity due to the carbon coating layer. For example, the thickness of the carbon coating layer may be measured by a transmission electron microscope on the cross-section of the positive electrode active material particles cut by Focused Ion Beam (FIB). However, the present disclosure is not limited thereto, and the thickness of the carbon coating layer may be measured through, for example, SEM, AFM, TOF-SIMS, XPS, or EDS analysis, and may be measured through a TEM-EDS line profile.

As an example, the carbon coating layer may have a uniform, or substantially uniform, thickness while having a thin thickness at a level of several to tens of nanometers. For example, a difference between the highest and lowest thicknesses of the carbon coating layer may be less than or equal to about 30 nm, for example, less than or equal to about 25 nm, less than or equal to about 20 nm, or less than or equal to about 15 nm, and may be greater than or equal to about 0.30 nm, greater than or equal to about 0.33 nm, greater than or equal to about 0.35 nm, or greater than or equal to about 0.40 nm. The fact that the difference between the highest thickness and the lowest thickness of the carbon coating layer satisfies the above range means that the carbon coating layer of a uniform, or substantially uniform, thickness is formed as desired in a film form on the surface of the positive electrode active material particle, and accordingly, the conductivity of the positive electrode active material may be improved or maximized. Herein, the highest and lowest thicknesses of the carbon coating layer may be measured based on an electron microscope image of the positive electrode active material. For example, in an electron microscope image of a cross-section of the positive electrode active material particle, the thickness of the thickest portion of the cross-section of the carbon coating layer may be defined as the highest thickness of the carbon coating layer, and the thickness of the thinnest portion may be defined as the lowest thickness of the carbon coating layer. A thickness of the carbon coating layer may be a vertical distance from the outer surface of the core particle to the outer surface of the carbon coating layer. For example, a scanning electron microscope or a transmission electron microscope may be used as an electron microscope.

For example, the powder resistance of the positive electrode active material may be less than or equal to about 10,000 Ω·cm, less than or equal to about 9,000 Ω·cm, less than or equal to about 8,500 Ω·cm, or less than or equal to about 8,000 Ω·cm, and may be greater than or equal to about 100 Ω·cm, greater than or equal to about 500 Ω·cm, greater than or equal to about 1,000 Ω·cm, or greater than or equal to about 2,000 Ω·cm. The fact that the powder resistance of the positive electrode active material satisfies the above range means that the conductivity of the positive electrode active material is exhibited as desired, and thus electrochemical characteristics such as capacity, initial efficiency, and cycle-life characteristics of a rechargeable lithium battery can be improved. For example, the powder resistance of the positive electrode active material may be measured using a powder resistance meter, and may be represented by a powder resistance measured at 20 kN by pressurizing the positive electrode active material particles in a range from 0 kN to 20 kN.

A positive electrode active material according to some example embodiments includes a core particle including a lithium cobalt-based composite oxide; and a carbon coating layer on the surface of the core particle. The carbon coating layer includes graphene having a layered structure in a range of 2 layers to 50 layers, the graphene of the carbon coating layer is included in an amount of greater than or equal to about 0.09 wt% based on 100 wt% of a total weight of the positive electrode active material.

In the case of the positive electrode active material, the coating yield on the surface of the core particle may be improved by controlling the size of the crystalline carbon material as the source material of the carbon coating layer as desired. Accordingly, a carbon coating layer including a high amount of graphene may be formed on the surface of the core particle even with a substantially small amount of carbon material, and the electrical conductivity of the positive electrode active material may be improved or maximized because the powder resistance of the positive electrode active material is further lowered. For example, the graphene of the carbon coating layer may be included in an amount in a range of about 0.09 wt% to about 2.8 wt%, 0.09 wt% to 2.5 wt%, 0.092 wt% to 2.0 wt%, 0.092 wt% to 1.0 wt%, 0.095 wt% to 0.5 wt%, or 0.095 wt% to 0.8 wt% based on a total weight of 100 wt% of the positive electrode active material. If (when) the amount of graphene satisfies the above range, high capacity and high energy density characteristics of a rechargeable lithium battery can be improved while securing conductivity by reducing powder resistance of the positive electrode active material. For example, even if (when) the amount of the graphene is a substantially small amount of less than about 1 wt%, the graphene is coated as desired on the surface of the particles to increase the electronic conductivity of the positive electrode active material, thereby increasing electrical conductivity and increasing the density of the positive electrode.

The description of the core particle and the carbon coating layer of the positive electrode active material may be described identically to those described above, and thus a detailed description thereof is omitted.

### Method for Preparing Positive Electrode Active Material

A method for preparing a positive electrode active material according to some example embodiments includes: (i) preparing a core particle including a lithium cobalt-based composite oxide; (ii) pulverizing flake-shaped graphite having an average size (D₅₀) in a range of about 3 µm to about 25 µm to prepare particulate graphite having an average size (D₅₀) of less than about 1 µm; and (iii) dry-mixing the core particle and the particulate graphite to obtain a positive electrode active material.

The method for preparing a positive electrode active material according to some example embodiments may form a carbon coating layer including graphene of a layered structure in a range of 2 layers to 50 layers on the surface of the core particle using particulate graphite. In addition, by controlling pulverizing conditions of flake-shaped graphite to adjust the average size (D₅₀) of particulate graphite, the coating yield of particulate graphite on the surface of the core particle in the step (iii) described below may be improved, and a carbon coating layer including a high amount of graphene may be formed on the surface of the core particle even with a substantially small amount of particulate graphite. Accordingly, the electrical conductivity of the positive electrode active material may be improved or maximized because the powder resistance of the positive electrode active material is further lowered. The method for preparing a positive electrode active material according to some example embodiments may prepare a positive electrode active material having high conductivity while reducing or minimizing manufacturing costs, and may secure conductivity and adhesive strength with an electrode plate even if (when) a small amount of binder and conductive material is used during the manufacturing of the positive electrode. In addition, as the amount of the binder used during the manufacturing of the positive electrode decreases, the amount of the positive electrode active material can be increased, so that a rechargeable lithium battery including the positive electrode active material may exhibit high capacity and high energy density characteristics.

Hereinafter, the configuration of the method for preparing the positive electrode active material according to some example embodiments is described in detail.

### (i) Step of Preparing Core Particle

The core particle including a lithium cobalt-based composite oxide are prepared. The core particle prepared in the step (i) of preparing a core particle may be described identically to the core particle in the positive electrode active material described above, and thus a detailed description thereof is omitted.

### (ii) Preparing Particulate graphite

The flake-shaped graphite having an average size (D₅₀) in a range of about 3 µm to about 25 µm is ground to prepare particulate graphite having an average size (D₅₀) of less than about 1 µm. Specific physical properties of the particulate graphite prepared in the step (ii) of preparing particulate graphite, for example, average size, I_{D}/I_{G} value, and the like, may be described identically to those of the particulate graphite in the positive electrode active material described above, and thus a detailed description thereof is omitted below.

The average size (D₅₀) of the flake-shaped graphite used in the step (ii) of preparing particulate graphite may be less than or equal to about 24 µm, less than or equal to about 23 µm, less than or equal to about 22 µm, less than or equal to about 21 µm, or less than or equal to about 20 µm, and may be greater than or equal to about 5 µm, greater than or equal to about 7 µm, or greater than or equal to about 10 µm. Herein, the average size of the flake-shaped graphite may be measured from a scanning electron microscope image. Herein, the average size (D₅₀) of the flake-shaped graphite may be measured through a particle size analyzer, and indicates a size of particles where a cumulative volume is 50 vol% in a particle size distribution. In addition, the size of a particle here may mean the length of the longest axis in a plane direction perpendicular to a thickness direction in a plate shape.

The flake-shaped graphite may have a ratio (I_{D}/I_{G}) of a peak intensity (I_{D}) near 1350 cm⁻¹ to a peak intensity (I_{G}) near 1580 cm⁻¹ in a Raman spectrum in a range of about 0.01 to about 0.15, for example, about 0.02 to about 0.14, about 0.08 to about 0.14, or about 0.1 to about 0.14.

In the step (ii) of preparing particulate graphite, the pulverizing of the flake-shaped graphite may be performed for a duration greater than or equal to about 50 minutes, and for example, the pulverizing of the flake-shaped graphite may be performed for a duration of about 50 minutes to about 200 minutes, about 50 minutes to about 180 minutes, about 50 minutes to about 150 minutes, or about 50 minutes to about 120 minutes. If (when) the time for performing the pulverizing of the flake-shaped graphite satisfies the above ranges, the coating yield of particulate graphite on the surface of the core particle in the step (iii) described below may be improved by controlling the average size (D₅₀) of particulate graphite to a desired level, and a carbon coating layer including a high amount of graphene may be formed on the surface of the core particle even with a substantially small amount of particulate graphite.

In the step (ii) of preparing particulate graphite, the pulverizing of flake-shaped graphite may be performed using a milling process. The milling process may utilize a method known to those skilled in the art, and for example, may utilize a device such as a ball mill, a bead mill, a jet mill, a pin mill, a roller mill, a hybrid mill, a colloid mill, or an air classifier mill (ACM).

In the step (ii) of preparing particulate graphite, the flake-shaped graphite may be pulverized by a ball milling method, and the ball milling uses zirconia beads having a size in a range of about 1 mm to about 25 mm, and may be performed at a speed in a range of about 200 rpm to about 5,000 rpm. The size of the zirconia beads may be in a range of about 1.2 mm to about 23 mm, about 1.3 mm to about 21 mm, or about 1.5 mm to about 20 mm. Additionally, the pulverizing of the flake-shaped graphite may be performed under conditions of a range of about 250 rpm to about 4,500 rpm, about 300 rpm to about 4,000 rpm, about 400 rpm to about 3,000 rpm, or about 600 rpm to about 2,000 rpm. When the size of the beads or the stirring speed respectively satisfy the above ranges, the coating yield of particulate graphite on the surface of the core particle in the step (iii) of obtaining positive electrode active material described below may be improved by controlling the average size (D₅₀) of particulate graphite to a desired level, and a carbon coating layer including a high amount of graphene may be formed on the surface of the core particle even with a substantially small amount of particulate graphite.

### (iii) Step of Obtaining Positive Electrode Active Material

The core particle and the particulate graphite are dry mixed to obtain a positive electrode active material. In the step (iii) of obtaining positive electrode active material, crystalline carbon derived from particulate graphite is coated on the surface of the core particle, and a carbon coating layer including graphene of a layered structure in a range of 2 layers to 50 layers may be formed on the surface of the core particle. In addition, because the average size (D₅₀) of particulate graphite is controlled as desired in the step (ii) of preparing particulate graphite described above, in the step (iii) of obtaining positive electrode active material, particulate graphite may be coated on the surface of the core particle with high coating yield, and accordingly, a carbon coating layer including a high amount of graphene may be formed on the surface of the core particle even with a substantially small amount of particulate graphite. Accordingly, the conductivity may be improved because the powder resistance of the manufactured positive electrode active material is reduced. In addition, because the carbon coating layer is formed with a thin and uniform, or substantially uniform, thickness on the surface of the core particle in the step (iii) of obtaining positive electrode active material, conductivity and adhesive strength with an electrode plate may be secured even if (when) a small amount of binder is used during the manufacturing of the positive electrode. In addition, as the amount of the binder used during the manufacturing of the positive electrode decreases, the amount of the positive electrode active material may be increased, so that a rechargeable lithium battery may exhibit high capacity and high energy density characteristics.

The particulate graphite may be mixed in an amount in a range of about 0.02 wt% to about 3.0 wt%, for example, about 0.02 wt% to about 2.8 wt%, about 0.03 wt% to about 2.5 wt%, about 0.05 wt% to about 2.0 wt%, about 0.05 wt% to about 1.0 wt%, about 0.05 wt% to about 0.5 wt%, or about 0.05 wt% to about 0.8 wt% based on 100 wt% of the total weight of the core particle and the particulate graphite. If (when) the mixing amount of particulate graphite satisfies the above range, high capacity and high energy density characteristics of a rechargeable lithium battery may be improved while improving the conductivity of the positive electrode active material. For example, even if (when) the mixing amount of particulate graphite is a substantially small amount of less than about 1 wt%, it is coated as desired on the surface of the core particle to increase the electronic conductivity of the positive electrode active material and increase the density of the positive electrode.

The step (iii) of obtaining positive electrode active material may be performed by mixing core particle and particulate graphite and applying shear force. In this case, while crystalline carbon derived from particulate graphite is positioned in a two-dimensional plane on the surface of the core particle, a coating layer including graphene of a layered structure exhibiting a dense crystal structure may be formed. For example, this process may be performed using a device for applying shear force, for example, a device having a blade inside, but is not limited thereto.

In the step (iii) of obtaining positive electrode active material, the core particle and particulate graphite may be mixed using a mixer, for example dry mixer (e.g., a Nobilta mixer) or high-shear mixer, and the core particle and particulate graphite may be mixed at a shear rate in a range of about 1,000 s⁻¹ to about 9,000 s⁻¹ and a blade rotation speed of less than or equal to about 20 m/s.

The core particle and particulate graphite may be mixed at a shear rate in a range of about 1,500 s⁻¹ to about 8,800 s⁻¹, about 2,000 s⁻¹ to about 8,800 s⁻¹, or about 2,500 s⁻¹ to about 8,500 s⁻¹. If (when) the range of the shear rate satisfies the above range, a coating layer may be effectively formed on the surface of the core particle while reducing or preventing damage to the core particle.

The rotation speed of the blade within the device for applying the shear force may be less than or equal to about 18 m/s, less than or equal to about 15 m/s, or less than or equal to about 10 m/s, and greater than or equal to about 3 m/s, greater than or equal to about 4 m/s, or greater than or equal to about 5 m/s. If (when) the range of the rotation speed of the blade satisfies the above range, a coating layer may be effectively formed on the surface of the core particle while reducing or preventing damage to the core particle.

The step (iii) of obtaining positive electrode active material may be performed at a speed in a range of about 500 rpm to about 6,000 rpm, and for example, may be performed at a speed of about 600 rpm to about 5,500 rpm, about 700 rpm to about 5,000 rpm, or about 800 rpm to about 4,000 rpm. If (when) the performance conditions of this step satisfy the above range, a coating layer may be effectively formed on the surface of the core particle while reducing or preventing damage to the core particle.

In the step (iii) of obtaining positive electrode active material, the core particle and the particulate graphite may be mixed in a dry method. In this case, manufacturing costs may be reduced, and because the coating layer is formed thinly and uniformly, or substantially uniformly, the adhesive strength with the electrode plate and conductivity of the positive electrode active material may be further improved. Herein, the dry method may mean a state not intentionally contacting a solvent such as a process solvent, or a state not intentionally including a solvent. For example, the dry mixing may be performed using a method known to those skilled in the art, and for example, a dry mixer, a homogenizer, or a Henschel mixer may be used.

In step (iii) of obtaining positive electrode active material, the coating yield of particulate graphite on the core particle may be greater than or equal to about 55%, for example, greater than or equal to about 60%, greater than or equal to about 65%, or greater than or equal to about 70%, and may be less than or equal to about 99%, less than or equal to about 98%, or less than or equal to about 95%. For example, a ratio of a weight of graphene in the positive electrode active material to a weight of particulate graphite input in step (iii) of obtaining positive electrode active material may be greater than or equal to about 55%, for example, greater than or equal to about 60%, greater than or equal to about 65%, or greater than or equal to about 70%, and may be less than or equal to about 99%, less than or equal to about 98%, or less than or equal to about 95%. Here, the coating yield of particulate graphite on the core particle may be one calculated using a carbon/sulfur (CS) analyzer, and for example, can be calculated by the method of Evaluation Example 2 described below. That is, because the average size (D₅₀) of particulate graphite is controlled as desired in the step (ii) of preparing particulate graphite described above, in the step (iii) of obtaining positive electrode active material, particulate graphite may be coated on the surface of the core particle with high coating yield, and accordingly, a carbon coating layer including a high amount of graphene may be formed on the surface of the core particle even with a substantially small amount of particulate graphite.

### Positive Electrode

In some example embodiments, a positive electrode includes a positive electrode current collector and a positive electrode active material layer on the positive electrode current collector, wherein the positive electrode active material layer includes the aforementioned positive electrode active material. The positive electrode active material layer may further include other types of positive electrode active materials in addition to the aforementioned positive electrode active materials. For example, the positive electrode active material may be included in an amount in a range of about 60 wt% to about 99.9 wt%, about 70 wt% to about 99.9 wt%, about 80 wt% to about 99.9 wt%, about 90 wt% to about 99.9 wt%, or about 95 wt% to about 99.9 wt% based on 100 wt% of a total weight of the positive electrode active material layer.

Hereinafter, the configuration of the positive electrode according to some example embodiments is described in detail.

### Current Collector

The current collector is not particularly limited as long as the current collector is conductive and does not cause adverse chemical changes in the positive electrode and in the rechargeable lithium battery including the positive electrode. For example, the current collector may include a thin film of at least one of aluminum (Al), stainless steel (SUS), indium (In), magnesium (Mg), titanium (Ti), iron (Fe), cobalt (Co), nickel (Ni), zinc (Zn), germanium (Ge), lithium (Li), or a combination thereof, and may for example include an aluminum thin film.

The current collector may have various forms such as a plate, a thin body, a film, a sheet, a foil, a net, a porous body, a foam body, or a non-woven body. For example, the current collector may include microscopic irregularities on its surface, which may improve adhesive strength to the positive electrode active material.

A thickness of the current collector may be in a range of about 1 µm to about 20 µm, for example about 5 µm to about 15 µm, or about 7 µm to about 10 µm.

### Binder

The binder improves binding properties of positive electrode active material particles with one another and with a current collector. For example, the binder may include one or more of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but is not limited thereto.

The binder may be included in an amount in a range of about 0.1 wt% to about 1 wt%, and for example, less than about 1.0 wt%, or less than or equal to about 0.9 wt% based on 100 wt% of a total weight of the positive electrode active material layer.

### Conductive Material

The conductive material is included to provide electrode conductivity, and any electrically conductive material may be used as a conductive material unless the electrically conductive material causes an adverse chemical change in the battery. For example, the conductive material may include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The conductive material may be included in an amount in a range of about 0 wt% to about 1 wt%, for example, about 0.05 wt% to about 1 wt%, less than about 1.0 wt%, less than or equal to about 0.8 wt%, less than or equal to about 0.7 wt%, or less than or equal to about 0.5 wt% based on 100 wt% of a total weight of the positive electrode active material layer. Because the positive electrode active material layer includes the positive electrode active material described above, desired or improved electronic conductivity may be exhibited, and low resistance and high positive electrode density may be implemented even if (when) the positive electrode active material layer does not include a separate conductive material or includes a substantially small amount of conductive material.

As an example, the density of the positive electrode active material layer may be in a range of about 2.0 g/cc to about 6.0 g/cc, for example, about 2.3 g/cc to about 5.8 g/cc, about 2.5 g/cc to about 5.7 g/cc, or about 2.5 g/cc to about 5.5 g/cc. In addition, for example, when the lithium transition metal composite oxide of the core particle is a lithium cobalt-based oxide, the density of the positive electrode active material layer may be in a range of about 3.5 g/cc to about 5.0 g/cc, about 3.7 g/cc to about 4.9 g/cc, about 3.8 g/cc to about 4.8 g/cc, or about 4.0 g/cc to about 4.5 g/cc. If (when) the density of the positive electrode active material layer satisfies the above range, the energy density of a rechargeable lithium battery can be improved. For example, because the positive electrode active material described above has high particle strength and lubrication degree of the particle surface, a compressing process may be performed with higher pressure. In addition, because the lubrication degree of the surface of the positive electrode active material is high, the compression efficiency of the positive electrode may be increased by the sliding effect. For example, because the compressing process may be performed with higher pressure, pores of the electrode plate in the positive electrode active material layer may be reduced, and the density of the positive electrode active material layer may be further improved.

The adhesive strength of the positive electrode active material layer to the current collector may be greater than or equal to about 0.5 gf/mm, and the resistance of the positive electrode active material layer may be less than or equal to about 40 Ω·cm. For example, the adhesive strength of the positive electrode active material layer to the current collector may be greater than or equal to about 1.0 gf/mm, greater than or equal to about 1.5 gf/mm, greater than or equal to about 2.0 gf/mm, or greater than or equal to about 2.5 gf/mm, and may be less than or equal to about 30 gf/mm, less than or equal to about 28 gf/mm, less than or equal to about 25 gf/mm, or less than or equal to about 23 gf/mm. Additionally, for example, the resistance of the positive electrode active material layer may be less than or equal to about 35 Ω·cm, less than or equal to about 30 Ω·cm, less than or equal to about 25 Ω·cm, or less than or equal to about 20 Ω·cm, and may be greater than or equal to about 0.5 Ω·cm, greater than or equal to about 1.0 Ω·cm, greater than or equal to about 3.0 Ω·cm, greater than or equal to about 5.0 Ω·cm, or greater than or equal to about 5.5 Ω·cm. For example, because the positive electrode active material layer includes the aforementioned positive electrode active material, the positive electrode active material layer can exhibit desired or improved electronic conductivity and achieve low resistance even if (when) the positive electrode active material layer does not include a separate conductive material or includes a substantially small amount of conductive material, and may achieve high adhesive strength to the electrode plate even if (when) the positive electrode active material layer includes a substantially small amount of binder.

A porosity of the positive electrode may be less than or equal to about 30%, less than or equal to about 25%, or less than or equal to about 20%, and greater than or equal to about 1%, greater than or equal to about 5%, or greater than or equal to about 7%. If (when) the porosity of the positive electrode satisfies the above range, the capacity and energy density of the positive electrode may be improved. Herein, the porosity of the positive electrode means a ratio of the volume of the pores present within the positive electrode to a total volume of the positive electrode, and may be measured, for example, by mercury porosimetry.

### Rechargeable Lithium Battery

A rechargeable lithium battery according to some example embodiments includes a positive electrode including a current collector, and a positive electrode active material layer on the current collector, wherein the positive electrode active material layer includes the aforementioned positive electrode active material, a negative electrode, and an electrolyte. The rechargeable lithium battery may be or include a lithium ion battery using a liquid electrolyte, or an all-solid-state rechargeable battery or a semi-solid rechargeable battery using a solid electrolyte. For convenience, the configuration of a lithium-ion battery is described in detail below.

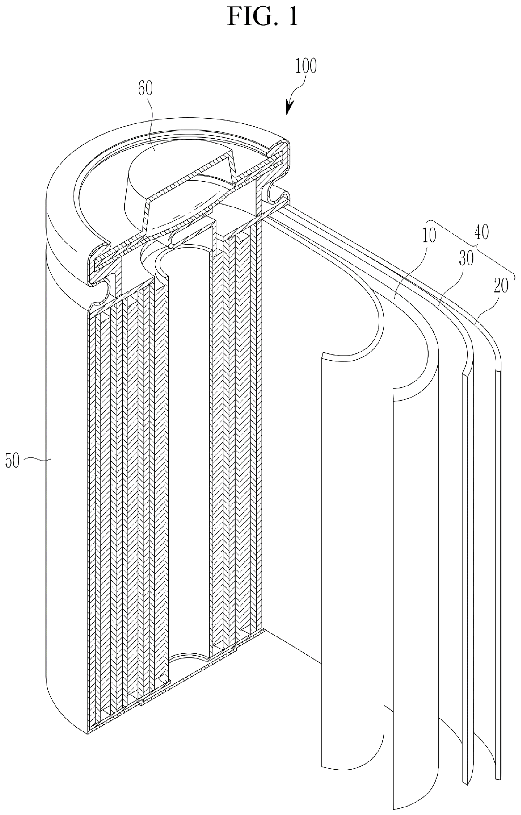

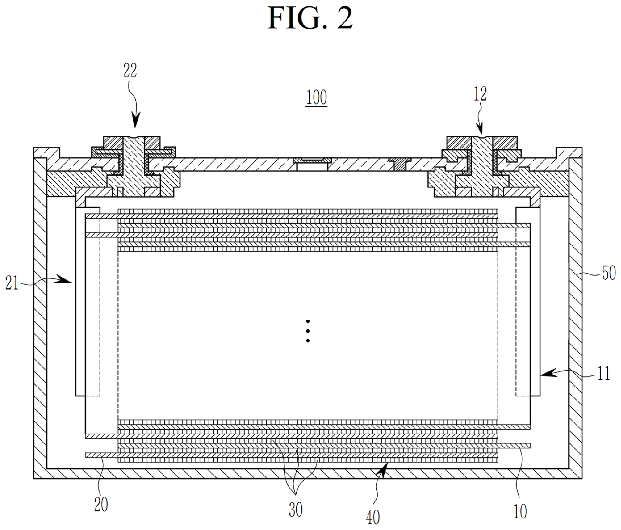

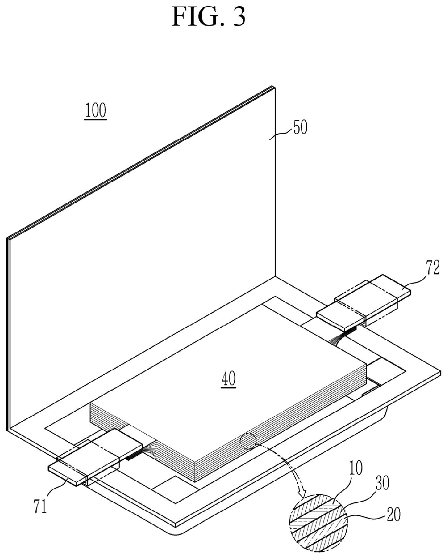

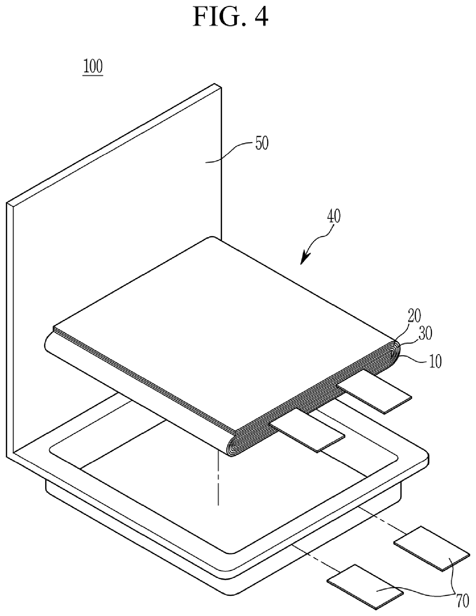

The rechargeable lithium battery may be classified into cylindrical, prismatic, pouch-shaped, coin-shaped, and the like, depending on the shape. FIG. 1 to FIG. 4 are schematic diagrams showing the rechargeable lithium battery according to some example embodiments, where FIG. 1 is a cylindrical battery, FIG. 2 is a prismatic battery, and FIG. 3 and FIG. 4 are a pouch-shaped battery.

Referring to FIG. 1 to FIG. 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50, as shown in FIG. 1. In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 3 and FIG. 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electric path for inducing the current formed in the electrode assembly 40 to the outside of the battery 100.

The rechargeable lithium battery according to some example embodiments may be rechargeable at a high voltage, or may be suitable for being driven at a high voltage. For example, the charge voltage of the rechargeable lithium battery may be greater than or equal to about 4.45 V, about 4.45 V to about 4.7 V, about 4.45 V to about 4.6 V, or about 4.45 V to about 4.55 V. By applying the positive electrode active material according to some example embodiments, the rechargeable lithium battery can significantly reduce an amount of gas generated even when charged at high voltage and can achieve high capacity and long cycle-life characteristics.

### Negative Electrode

The negative electrode may include a current collector and a negative electrode active material layer on the current collector. The negative electrode active material layer includes a negative electrode active material, and may further include a binder, a conductive material, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, SnO₂, a Sn alloy, or a combination thereof.

The silicon-carbon composite may be or include a composite of silicon and amorphous carbon. An average particle diameter (D₅₀) of the silicon-carbon composite particles may be, for example, in a range of about 0.5 µm to about 20 µm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, and calcined coke.

When the silicon-carbon composite includes silicon and amorphous carbon, an amount of silicon may be in a range of about 10 wt% to about 50 wt%, and an amount of amorphous carbon may be in a range of about 50 wt% to about 90 wt% based on 100 wt% of the silicon-carbon composite. In addition, when the silicon-carbon composite includes silicon, amorphous carbon, and crystalline carbon, an amount of silicon may be in a range of about 10 wt% to about 50 wt%, an amount of crystalline carbon may be in a range of about 10 wt% to about 70 wt%, and an amount of amorphous carbon may be in a range of about 20 wt% to about 40 wt% based on 100 wt% of the silicon-carbon composite.

For example, a thickness of the amorphous carbon coating layer may be in a range of about 5 nm to about 100 nm. An average particle diameter (D₅₀) of the silicon particles (primary particles) may be in a range of about 10 nm to about 1 µm, or about 10 nm to about 200 nm. The silicon particles may be in the form of silicon alone, in the form of a silicon alloy, or in an oxidized form. The oxidized form of silicon may be represented by SiOₓ (0<x≤2). For example, the atomic content ratio of Si:O, which indicates a degree of oxidation, may be in a range of about 99:1 to about 33:67.

The Si-based negative electrode active material or Sn-based negative electrode active material may be mixed with the carbon-based negative electrode active material. When a Si-based negative electrode active material or a Sn-based negative electrode active material is used in combination with a carbon-based negative electrode active material, a weight ratio of the Si-based negative electrode active material or the Sn-based negative electrode active material to the carbon-based negative electrode active material may be in a range of about 1:99 to about 90:10.

The negative electrode active material may be included in an amount in a range of about 80 wt% to about 99 wt, for example, about 85 wt% to about 99 wt%, or about 90 wt% to about 99 wt% based on 100 wt% of the total weight of the negative electrode active material layer.

### Binder

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The binder may be included in an amount in a range of about 0.5 wt% to about 5 wt%, for example, about 0.5 wt% to about 4 wt%, or about 1 wt% to about 3 wt% based on 100 wt% of the total weight of the negative electrode active material layer.

### Conductive Material

The conductive material is included to provide electrode conductivity, and any electrically conductive material may be used as a conductive material unless the electrically conductive material causes an adverse chemical change in the battery. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The conductive material may be included in an amount in a range of about 0.5 wt% to about 5 wt%, for example, about 0.5 wt% to about 4 wt%, or about 1 wt% to about 3 wt% based on 100 wt% of the total weight of the negative electrode active material layer.

### Current Collector

There is no particular limitation on the negative electrode current collector as long as the negative electrode current collector does not cause adverse chemical changes in the negative electrode and in the rechargeable lithium battery including the negative electrode. For example, the negative electrode current collector can be or include at least one of a copper foil, a nickel foil, a stainless steel foil, a titanium foil, a nickel foam, a copper foam, a polymer substrate coated with a conductive metal, or a combination thereof.

The negative electrode current collector may have various forms, such as a plate, a thin body, a film, a sheet, a foil, a net, a porous body, a foam body, or a non-woven body. For example, the negative electrode current collector may include microscopic irregularities on its surface, which may improve adhesive strength to the negative electrode active material.

A thickness of the negative electrode current collector may be in a range of about 1 µm to about 20 µm, for example, about 5 µm to about 15 µm, or about 7 µm to about 10 µm.

### Electrolyte

For example, the electrolyte for a rechargeable lithium battery may be or include an electrolyte solution, and may include a non-aqueous organic solvent and a lithium salt.

The non-aqueous organic solvent constitutes a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, t-butyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like.

The ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone or in a mixture of two or more types of solvents, and when two or more types of solvents are used in a mixture, a mixing ratio can be adjusted as desired according to the desired battery performance, which is widely known to those working in the field.

When using a carbonate-based solvent, a cyclic carbonate and a chain carbonate may be mixed together, and the cyclic carbonate and the chain carbonate may be mixed in a volume ratio in a range of about 1:1 to about 1:9.

The non-aqueous organic solvent may further include an aromatic hydrocarbon-based organic solvent. For example, a carbonate-based solvent and an aromatic hydrocarbon-based organic solvent may be mixed together in a volume ratio in a range of about 1:1 to about 30:1.

The electrolyte solution may further include at least one of vinylethylene carbonate, vinylene carbonate or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (when) the concentration of lithium salt is within the above range, the electrolyte solution has desired ionic conductivity and viscosity, and thus desired or improved performance can be achieved and lithium ions can move effectively.

### Separator

Depending on the type of the rechargeable lithium battery, the rechargeable lithium battery may further include a separator between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one surface, or both surfaces, of the porous substrate.

The porous substrate may be or include a polymer film formed of or including any one or more of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, TEFLON (polytetrafluoroethylene), or a copolymer or mixture of two or more thereof. The porous substrate may include glass fibers, or may comprise a composite membrane of polymer and glass fibers.

The porous substrate may have a thickness in a range of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of about 1 nm to about 2000 nm, for example, about 100 nm to about 1000 nm, or about 100 nm to about 700 nm. Herein, the average particle diameter (D₅₀) of the inorganic particles may be obtained by randomly selecting about 20 particles from a scanning electron microscope image of the inorganic particles, measuring their particle diameters (diameter, long diameter, or long axis length) to obtain a particle size distribution, and then taking the size of particles having a cumulative volume of 50 vol% from the particle size distribution as the average particle diameter.

The organic material and the inorganic material may be mixed in one coating layer, or a coating layer including an organic material and a coating layer including an inorganic material may be stacked together. The thickness of the coating layer may be in a range of about 0.5 µm to about 20 µm, for example, about 1 µm to about 10 µm, or about 1 µm to about 5 µm.

The rechargeable lithium battery according to some example embodiments may be applicable to, e.g., automobiles, mobile phones, or various types of electrical devices, but is not limited thereto.

A method of preparing a positive electrode active material, according to an example embodiment is now described. The method includes an operation, which includes preparing a core particle including a lithium cobalt-based composite oxide.

Another operation includes preparing particulate graphite having an average size (D₅₀) of less than about 1 µm by pulverizing flake-shaped graphite having an average size (D₅₀) in a range of about 3 µm to about 25 µm. For example, in the preparing the particulate graphite, the pulverizing of the flake-shaped graphite is performed for a duration greater than or equal to about 50 minutes. In another example, in the preparing the particulate graphite, the flake-shaped graphite is pulverized by ball milling, and the ball milling uses zirconia beads having a size in a range of about 1 mm to about 25 mm and is performed at a speed in a range of about 200 rpm to about 5,000 rpm. In yet another example, the particulate graphite is mixed in an amount in a range of about 0.02 wt% to about 3.0 wt% based on a total of 100 wt% of the core particle and the particulate graphite.

Another operation includes dry-mixing the core particle and the particulate graphite to obtain a positive electrode active material. For example, in the dry-mixing, the core particle and the particulate graphite are mixed using a mixer, and the core particle and the particulate graphite are mixed at a shear rate in a range of about 1,000 s⁻¹ to about 9,000 s⁻¹ and a blade rotation speed of less than or equal to about 20 m/s.

Examples and comparative examples of the present disclosure are described below. However, the following examples are only examples of the present disclosure, and the present disclosure is not limited to the following examples.

### Example 1

### (1) Preparation of Positive Electrode Active Material

Preparation of Core Particle: LiCoO₂ (LCO) having an average particle diameter (D₅₀) of 14.94 µm was prepared as a core particle.

Preparation of Particulate graphite: Flake-shaped graphite (G5 (C-one), average particle diameter (D₅₀): 17.94 µm) and ZrO₂ beads having a particle diameter of 2 mm corresponding to 10 times the weight of the flake-shaped graphite were mixed. Thereafter, the flake-shaped graphite was milled for 1 hour under a condition of 1,000 rpm to prepare particulate graphite. At this time, the average size (D₅₀) of the particulate graphite measured through a particle size analyzer using laser diffraction is 0.33 µm.

Obtaining of Positive Electrode Active Material: 99.8 wt% of the core particle and 0.2 wt% of the particulate graphite were input into a dry mixer. After adjusting the shear rate to 7,000 s⁻¹ and the rotation speed of the blade in the mixer to 4.7 m/s, the core particle and particulate graphite were mixed for 10 minutes to obtain a positive electrode active material.

### (2) Manufacturing of Positive Electrode

99.1 wt% of the positive electrode active material prepared in the (1), 0.2 wt% of carbon nanotube as a conductive material, and 0.7 wt% of polyvinylidene fluoride as a binder were dispersed in an N-methylpyrrolidone (NMP) solvent to prepare a positive electrode active material slurry. The positive electrode active material slurry was coated on a 12 µm-thick aluminum substrate (a current collector) and dried to form a positive electrode active material layer and then, compressed to manufacture a positive electrode. In the manufactured positive electrode, the loading level of the positive electrode active material layer was 16 mg/cm², and the density of the positive electrode active material layer was 3.38 g/cc. In addition, as a result of conducting SEM analysis for the compressed positive electrode, the thickness of the positive electrode active material layer was confirmed to be about 50 µm.

### (3) Manufacturing of Rechargeable Lithium Battery Cell

The positive electrode manufactured in the (2) and a lithium metal counter electrode were used, and a separator having a polyethylene polypropylene multilayer structure was interposed therebetween. An electrolyte solution, which prepared by adding 1.3 M LiPF₆ lithium salt to a solvent including ethylene carbonate, propylene carbonate, and propyl propionate mixed in a volume ratio of 10:15:75, was injected thereinto to manufacture a rechargeable lithium battery cell in a conventional method.

### Example 2

A positive electrode active material, a positive electrode, and a rechargeable lithium battery cell were manufactured by substantially the same method as in Example 1, except that the performance time of the milling process for flake-shaped graphite was changed to 50 minutes (average size (D₅₀) of particulate graphite: 0.48 µm), in the process of '(1) Preparation_of Positive Electrode Active Material' of the Example 1.

### Comparative Example 1

### (1) Preparation of Positive Electrode Active Material

Preparation of Core Particle: LiCoO₂ (LCO) having an average particle diameter (D₅₀) of 14.94 µm was prepared as a core particle.

Obtaining of Positive Electrode Active Material: 99.8 wt% of the core particle and 0.2 wt% of flake-shaped graphite (G5 (C-one), average particle diameter (D₅₀): 17.94 µm) were added to a dry mixer. After adjusting the shear rate to 7,000 s⁻¹ and the rotation speed of the blade in the mixer to 4.7 m/s, the core particle and flake-shaped graphite were mixed for 10 minutes to obtain a positive electrode active material.

### (2) Manufacturing of Positive Electrode and Rechargeable Lithium Battery Cells

Using the positive electrode active material of Comparative Example 1 prepared in the above (1), a positive electrode active material, a positive electrode, and a rechargeable lithium battery cell were manufactured by substantially the same method as in Example 1.

### Comparative Example 2

A positive electrode active material, a positive electrode, and a rechargeable lithium battery cell were manufactured by substantially the same method as in Example 1, except that the performance time of the milling process for flake-shaped graphite was changed to 30 minutes (average size (D₅₀) of particulate graphite: 2.4 µm), in the process of '(1) Preparation_of Positive Electrode Active Material' of the Example 1.

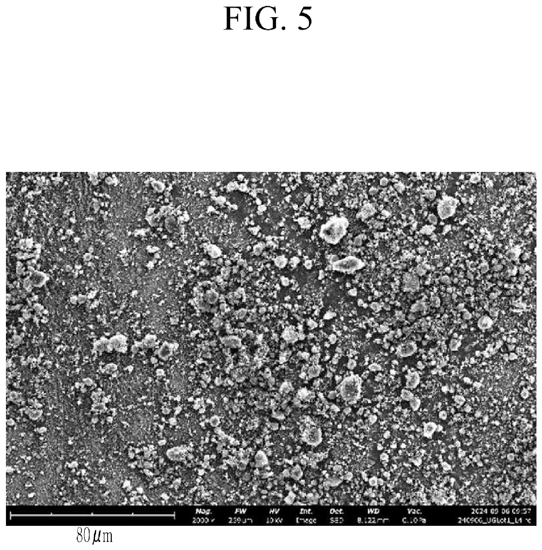

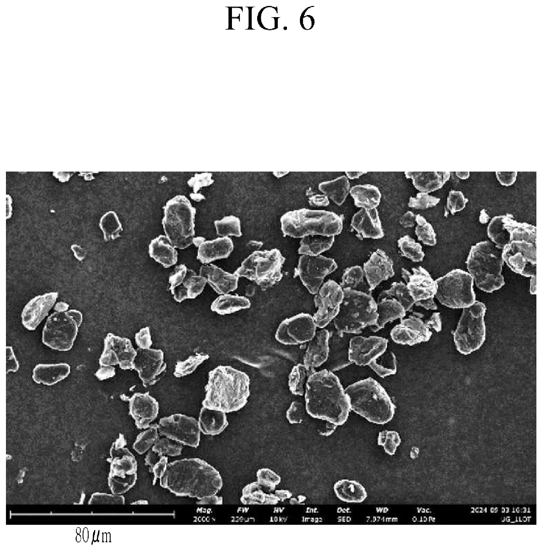

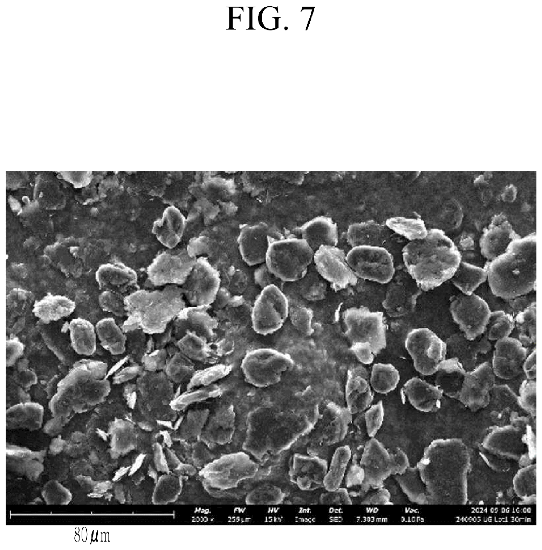

Scanning electron microscope (SEM) images of the surface of graphite used on the surface of the core particles of Example 1, Comparative Example 1, and Comparative Example 2 are shown sequentially in FIG. 5 to FIG. 7. FIG. 5 is a scanning electron microscope image of the surface of particulate graphite used during the preparation of the positive electrode active material of Example 1; FIG. 6 is a scanning electron microscope image of the surface of flake-shaped graphite used during the preparation of the positive electrode active material of Comparative Example 1; and FIG. 7 is a scanning electron microscope image of the surface of particulate graphite used during the preparation of the positive electrode active material of Comparative Example 2.

Referring to FIG. 5 to FIG. 7, as the performance time of the pulverizing process for flake-shaped graphite increases, the average size (D₅₀) of particulate graphite decreases.

### Comparative Example 3

A positive electrode active material, a positive electrode, and a rechargeable lithium battery cell were manufactured by substantially the same method as in Example 1, except that the performance time of the milling process for flake-shaped graphite was changed to 40 minutes (average size (D₅₀) of particulate graphite: 1.57 µm), in the process of '(1) Preparation_of Positive Electrode Active Material' of the Example 1.

### Evaluation Example 1: Electron Microscope Image Analysis

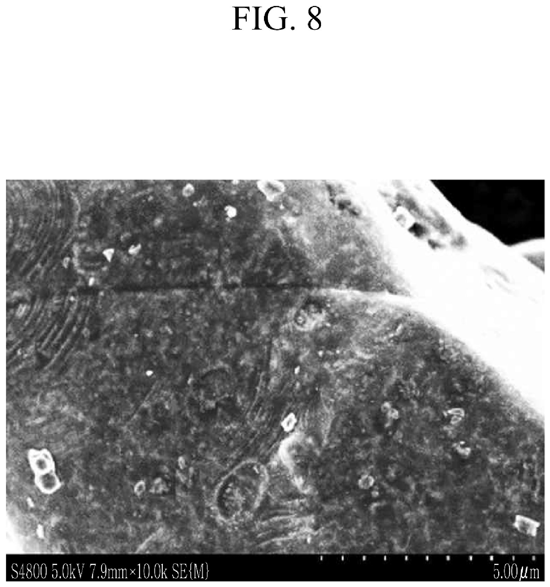

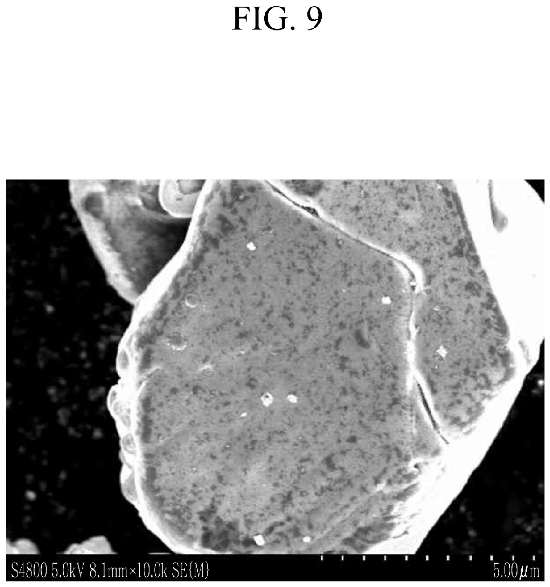

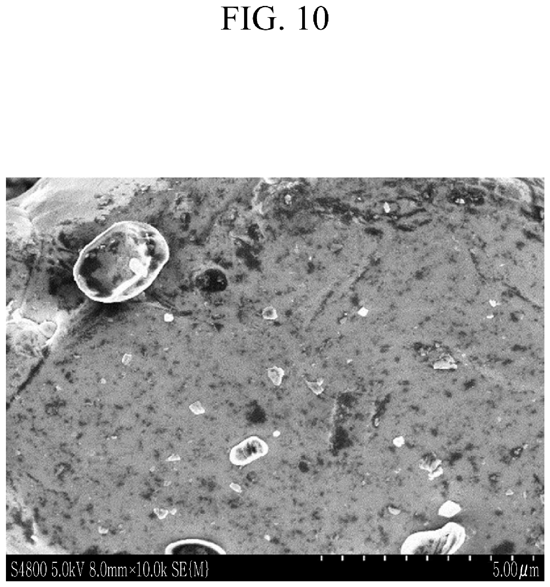

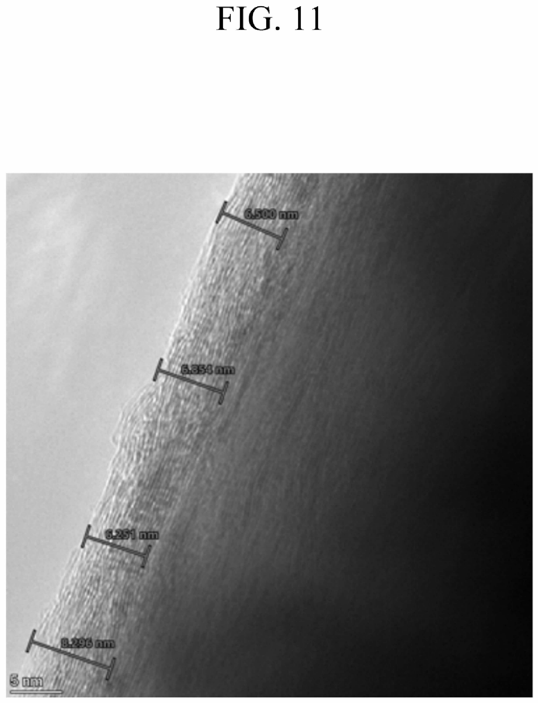

Scanning electron microscope images of the surface of the positive electrode active materials prepared in Example 1, Comparative Example 1, and Comparative Example 2 are shown sequentially in FIG. 8 to FIG. 10, and a transmission electron microscope image of the cross-section of the positive electrode active material prepared in Example 1 is shown in FIG. 11. FIG. 8 is a scanning electron microscope image of the surface of the positive electrode active material prepared in Example 1, FIG. 9 is a scanning electron microscope image of the surface of the positive electrode active material prepared in Comparative Example 1, and FIG. 10 is a scanning electron microscope image the surface of of the positive electrode active material prepared in Comparative Example 2.

Referring to FIG. 8 to FIG. 10, in the positive electrode active material of Example 1, differently from Comparative Example 1 and Comparative Example 2, a carbon coating layer was formed uniformly on the surface of the core particle and was a film form continuously surrounding the surface of the core particle. That is, as the average size (D₅₀) of particulate graphite was controlled, the coating yield of particulate graphite on the surface of the core particle was improved, and a carbon coating layer including a high amount of graphene was formed on the surface of the core particle.

In addition, the cross-section of the positive electrode active material of Example 1 was observed via transmission electron microscopy (TEM). Referring to FIG. 11, the results confirmed that the carbon coating layer comprised graphene having a layered structure of about 20 layers, and that the thickness of the carbon coating layer was about 6.251 nm to about 8.296 nm.

### Evaluation Example 2: Measurement of Physical Properties of Positive Electrode Active Material

For the positive electrode active materials prepared in Examples and Comparative Examples, coating yield and powder resistance were analyzed, and the results are shown in Table 1 below.

Specific evaluation methods are as follows.

### (1) Coating Yield

The coating yield on the surface of the core particle was measured using a CS analyzer. Specifically, the amount of carbon (C1) for the positive electrode active material on which a carbon coating layer was not formed (that is, the core particle itself) was measured using a CS analyzer. In addition, the amount of carbon (C2) of each positive electrode active material of Examples and Comparative Examples was measured using a CS analyzer. At this time, the content of carbon (C2) of the positive electrode active material is shown in Table 1 below as the amount of graphene on the surface of the core particle.

Independently of this, for each positive electrode active material of Examples and Comparative Examples, after removing residual graphite not used for coating using an air flow classifier (revolutions per second of the rotor: 40 Hz; taking 5 minutes based on about 50 g of the positive electrode active material), the amount of carbon (C3) of the obtained product was measured using a CS analyzer.

Based on the measured amount of carbon, the coating yield was calculated based on the following equation: Equation: $Coating yield = 100 \times \left(C3-C1\right) / \left(C2-C1\right) .$

### (2) Powder Resistance

Using a powder resistance meter (MCP-PD600, Nittoseiko Analytech Co.), 1 g of positive electrode active material was pressurized from 0 to 20 kN, and the powder resistance at 20 kN was measured.

### Evaluation Example 3: Performance Analysis of Rechargeable Lithium Battery Cell

Energy density was analyzed for the rechargeable lithium battery cells manufactured in Examples and Comparative Examples, and the results are shown in Table 1 below.

Specific evaluation methods are as follows.

After punching the compressed electrode plate to a size with a diameter of 14 mm, the thickness was measured to calculate the density of the mixture layer (positive electrode active material layer). Thereafter, energy density was calculated by multiplying the density of the mixture layer (positive electrode active material layer), the fraction of active material, and the initial discharge capacity.

**Table 1:**

| | Average particle diameter of core particles (µm) | Average size of particulate graphite (µm) | Ratio of the size of particulate graphite to the average particle diameter of core particles | Positive electrode active material | | | Rechargeable lithium battery cell |
|---|---|---|---|---|---|---|---|
| | | | | Amount of graphene (C2, wt%) | Coating yield (%) | Powder resistance (Ω·cm) | Energy density (mAh/cc) |
| Example 1 | 14.94 | 0.33 | 0.022 | 0.103 | 73.3 | 3,483 | 782 |
| Example 2 | 14.94 | 0.48 | 0.032 | 0.097 | 69.4 | 7,950 | 778 |
| Comparative Example 1 | 14.94 | 17.94 | 1.201 | 0.059 | 41.7 | 192,61 6 | 768 |
| Comparative Example 2 | 14.94 | 2.4 | 0.161 | 0.077 | 54.1 | 97,089 | 771 |
| Comparative Example 3 | 14.94 | 1.57 | 0.105 | 0.084 | 60.0 | 15,461 | 773 |

Referring to Table 1, in the case of Examples 1 and 2, the amount of the graphene (C2, based on 100 wt% of the positive electrode active material) was 0.097 wt% to 0.103 wt%, the coating yield was 69.4% to 73.3%, the powder resistance was 3,483 Ω·cm to 7,950 Ω·cm, and the energy density was 778 mAh/cc to 782 mAh/cc.

On the contrary, in the case of Comparative Example 1, the amount of the graphene was measured to be substantially low, the coating yield was measured to be substantially low, the powder resistance was measured to be substantially high, and the energy density was measured to be substantially low compared to Examples 1 and 2. That is, by including the carbon coating layer, the powder resistance of the positive electrode active material is lowered, so that the electrical conductivity of the positive electrode active material may be improved.

In addition, in the case of Comparative Example 2 and Comparative Example 3 where the average size (D₅₀) of particulate graphite is substantially high, compared to Examples 1 and 2, the amount of the graphene was low, the coating yield was low, the powder resistance was high, and the energy density was low. That is, by controlling the size of the graphene of the carbon coating layer, the coating yield of particulate graphite on the surface of the core particle is improved, and the powder resistance of the positive electrode active material is further lowered.

While this disclosure has been described in connection with what is presently considered to be practical example embodiments, it is to be understood that the disclosure is not limited to the disclosed embodiments. On the contrary, the disclosure is intended to cover various modifications and equivalent arrangements included within the spirit and scope of the appended claims.

**Description of symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

The present disclosure additionally includes the following numbered embodiments:
1. A positive electrode active material, comprising
   a core particle comprising a lithium cobalt-based composite oxide; and
   a carbon coating layer on the surface of the core particle;
   wherein the carbon coating layer comprises graphene having a layered structure of 2 layers to 50 layers, and
   a size of the graphene measured through an electron microscope image of a surface of the positive electrode active material is less than about 1 µm.
2. The positive electrode active material of embodiment 1, wherein
   the size of the graphene is about 0.01 µm to about 0.6 µm.
3. The positive electrode active material of embodiment 1, wherein
   a thickness of the graphene is less than or equal to about 20 nm.
4. The positive electrode active material of embodiment 1, wherein
   the graphene has a ratio (I_{D}/I_{G}) of a peak intensity (I_{D}) near 1350 cm⁻¹ to a peak intensity (I_{G}) near 1580 cm⁻¹ in a Raman spectrum of about 0.15 to about 0.50.
5. The positive electrode active material of embodiment 1, wherein
   the graphene of the carbon coating layer is included in an amount of about 0.09 wt% to about 3.0 wt% based on 100 wt% of a total weight of the positive electrode active material.
6. The positive electrode active material of embodiment 1, wherein
   the graphene of the carbon coating layer is derived from particulate graphite having an average size (D₅₀) of less than about 1 µm as measured by a particle size analyzer using laser diffraction.
7. The positive electrode active material of embodiment 1, wherein
   the carbon coating layer is in a form of a film continuously surrounding the surface of the core particle.
8. The positive electrode active material of embodiment 1, wherein
   the core particle comprises a lithium cobalt-based composite oxide represented by Chemical Formula 1:

      [Chemical Formula 1] Liₐ₁Coₓ₁M¹_{y1}O_{2-b1}X_{b1}
   wherein, in Chemical Formula 1, 0.9≤a1≤1.8, 0.7≤x1≤1, 0≤y1≤0.3, 0.9≤x1+y1≤1.1, and 0≤b1≤0.1, M¹is one or more elements of Al, B, Ba, Ca, Ce, Cr, Cu, Fe, Mg, Mn, Mo, Ni, Se, Si, Sn, Sr, Ti, V, W, Y, Zn, and Zr, and X is one or more elements of F, P, and S.
9. The positive electrode active material of embodiment 1, wherein
   a ratio of the size of the graphene to an average particle diameter (D₅₀) of the core particle is less than about 0.1
10. The positive electrode active material of embodiment 1, wherein
   the core particle comprises first particles having an average particle diameter (D₅₀) of about 8 µm to about 20 µm and second particles having an average particle diameter (D₅₀) of about 0.5 µm to about 6 µm.
11. The positive electrode active material of embodiment 1, wherein
   a powder resistance of the positive electrode active material is less than or equal to about 10,000 Ω·cm.
12. A positive electrode active material, comprising
   a core particle comprising a lithium cobalt-based composite oxide; and
   a carbon coating layer on the surface of the core particle;
   wherein the carbon coating layer comprises graphene having a layered structure of 2 layers to 50 layers, and
   the graphene of the carbon coating layer is included in an amount of greater than or equal to about 0.09 wt% based on 100 wt% of a total weight of the positive electrode active material.
13. The positive electrode active material of embodiment 12, wherein
   the graphene of the carbon coating layer is included in an amount of about 0.09 wt% to about 3.0 wt% based on 100 wt% of a total weight of the positive electrode active material.
14. The positive electrode active material of embodiment 12, wherein
   a size of the graphene measured through an electron microscope image of the surface of the positive electrode active material is less than about 1 µm, and a thickness of the graphene is less than or equal to about 20 nm.
15. The positive electrode active material of embodiment 12, wherein
   a ratio of the size of the graphene to an average particle diameter (D₅₀) of the core particle is less than 0.1.
16. A method for preparing a positive electrode active material, comprising
   (i) preparing a core particle comprising a lithium cobalt-based composite oxide;
   (ii) preparing particulate graphite having an average size (D₅₀) of less than about 1 µm by pulverizing flake-shaped graphite having an average size (D₅₀) of about 3 µm to about 25 µm; and
   (iii) dry-mixing the core particle and the particulate graphite to obtain a positive electrode active material.
17. The method for preparing the positive electrode active material of embodiment 16, wherein
   in the ( ii ), the the pulverizing of the flake-shaped graphite is performed for greater than or equal to about 50 minutes.
18. The method for preparing the positive electrode active material of embodiment 16, wherein
   in the ( ii ), the flake-shaped graphite is pulverized by a ball milling method, and the ball milling uses zirconia beads having a size of about 1 mm to about 25 mm and is performed at a speed of about 200 rpm to about 5,000 rpm.
19. The method for preparing the positive electrode active material of embodiment 16, wherein
   the particulate graphite is mixed in an amount of about 0.02 wt% to about 3.0 wt% based on a total of 100 wt% of the core particle and the particulate graphite.
20. The method for preparing the positive electrode active material of embodiment 16, wherein
   in the (iii), the core particle and the particulate graphite are mixed using a Nobilta mixer, and
   the core particle and the particulate graphite are mixed at a shear rate of about 1,000 s⁻¹ to about 9,000 s⁻¹ and a blade rotation speed of less than or equal to about 20 m/s.

## Claims

1. A positive electrode active material, comprising:
a core particle comprising a lithium cobalt-based composite oxide; and
a carbon coating layer on the surface of the core particle;
wherein the carbon coating layer comprises graphene having a layered structure in a range of 2 layers to 50 layers, and
a size of the graphene measured through an electron microscope image of a surface of the positive electrode active material is less than 1 µm.

2. The positive electrode active material as claimed in claim 1, wherein the size of the graphene is in a range of 0.01 µm to 0.6 µm, and/or
wherein a thickness of the graphene is less than or equal to 20 nm.

3. The positive electrode active material as claimed in claim 1 or 2, wherein the graphene has a ratio (I_{D}/I_{G}) of a peak intensity (I_{D}) near 1350 cm⁻¹ to a peak intensity (I_{G}) near 1580 cm⁻¹ in a Raman spectrum in a range of 0.15 to 0.50.

4. The positive electrode active material as claimed in any one of claims 1 to 3, wherein the graphene of the carbon coating layer is included in an amount in a range of 0.09 wt% to 3.0 wt% based on 100 wt% of a total weight of the positive electrode active material.

5. The positive electrode active material as claimed in any one of claims 1 to 4, wherein the graphene of the carbon coating layer is derived from particulate graphite having an average size (D₅₀) of less than 1 µm, preferably as measured by a particle size analyzer using laser diffraction, and/or
wherein the carbon coating layer is in a form of a film continuously surrounding the surface of the core particle.

6. The positive electrode active material as claimed in any one of claims 1 to 5, wherein the core particle comprises a lithium cobalt-based composite oxide represented by Chemical Formula 1:
Chemical Formula 1: Liₐ₁Coₓ₁M¹_{y1}O_{2-b1}X_{b1};
wherein:
0.9≤a1≤1.8, 0.7≤x1≤1, 0≤y1≤0.3, 0.9≤x1+y1≤1.1, and 0≤b1≤0.1;
M¹ comprises one or more of Al, B, Ba, Ca, Ce, Cr, Cu, Fe, Mg, Mn, Mo, Ni, Se, Si, Sn, Sr, Ti, V, W, Y, Zn, and Zr; and
X comprises one or more of F, **P,** and S.

7. The positive electrode active material as claimed in any one of claims 1 to 6, wherein a ratio of the size of the graphene to an average particle diameter (D₅₀) of the core particle is less than 0.1.

8. The positive electrode active material as claimed in any one of claims 1 to 7, wherein the core particle comprises:
first particles having an average particle diameter (D₅₀) in a range of 8 µm to 20 µm; and/or
second particles having an average particle diameter (D₅₀) in a range of 0.5 µm to 6 µm.

9. The positive electrode active material as claimed in any one of claims 1 to 8, wherein a powder resistance of the positive electrode active material is less than or equal to 10,000 Ω·cm.

10. A positive electrode active material, comprising:
a core particle comprising a lithium cobalt-based composite oxide; and
a carbon coating layer on the surface of the core particle;
wherein the carbon coating layer comprises graphene having a layered structure in a range of 2 layers to 50 layers, and
the graphene of the carbon coating layer is included in an amount greater than or equal to 0.09 wt% based on 100 wt% of a total weight of the positive electrode active material.

11. The positive electrode active material as claimed in claim 10, wherein the graphene of the carbon coating layer is included in an amount in a range of 0.09 wt% to 3.0 wt% based on 100 wt% of a total weight of the positive electrode active material.

12. The positive electrode active material as claimed in claim 10 or **11,** wherein a size of the graphene, preferably measured through an electron microscope image of the surface of the positive electrode active material, is less than 1 µm, and/or a thickness of the graphene is less than or equal to 20 nm, and/or
wherein a ratio of a size of the graphene to an average particle diameter (D₅₀) of the core particle is less than 0.1.

13. A method for preparing a positive electrode active material, the method comprising:
(i) preparing a core particle comprising a lithium cobalt-based composite oxide;
(ii) preparing particulate graphite having an average size (D₅₀) of less than 1 µm by pulverizing flake-shaped graphite having an average size (D₅₀) in a range of 3 µm to 25 µm; and
(iii) dry-mixing the core particle and the particulate graphite to obtain a positive electrode active material.

14. The method for preparing the positive electrode active material as claimed in claim 13, wherein in the preparing the particulate graphite, the pulverizing of the flake-shaped graphite is performed for a duration greater than or equal to 50 minutes, and/or
wherein:
in the preparing the particulate graphite, the flake-shaped graphite is pulverized by ball milling, and
preferably the ball milling uses zirconia beads having a size in a range of 1 mm to 25 mm and/or is performed at a speed in a range of 200 rpm to 5,000 rpm.

15. The method for preparing the positive electrode active material as claimed in claim 13 or 14, wherein the particulate graphite is mixed in an amount in a range of 0.02 wt% to 3.0 wt% based on a total of 100 wt% of the core particle and the particulate graphite, and/or
wherein:
in the dry-mixing, the core particle and the particulate graphite are mixed using a mixer, preferably a Nobilta mixer, and
preferably the core particle and the particulate graphite are mixed at a shear rate in a range of 1,000 s⁻¹ to 9,000 s⁻¹ and/or a blade rotation speed of less than or equal to 20 m/s.
